Europäisches Patentamt

**European Patent Office**

**Office européen des brevets**

(19)

(11) Numéro de publication: **0 073 072**
**A1**

(12)

# DEMANDE DE BREVET EUROPEEN

(21) Numéro de dépôt: **82200866.0**

(22) Date de dépôt: **09.07.82**

(51) Int. Cl.³: **A 01 K 87/00**

(30) Priorité: **26.08.81 BE 2059314**

(43) Date de publication de la demande:
**02.03.83 Bulletin 83 9**

(84) Etats contractants désignés:
**AT DE FR GB IT LU NL**

(71) Demandeur: **FABRIQUE NATIONALE HERSTAL en abrégé FN Société Anonyme**

**B-4400 Herstal(BE)**

(72) Inventeur: **Gosset, François Joseph
rue Celestin Demblon 99
B-4400 Herstal(BE)**

(74) Mandataire: **Bockstael, Daniel
M.F.J. Bockstael Arenbergstraat 13
B-2000 Anvers(BE)**

(54) **Canne à pêche télescopique à emmagasineur-dévideur de ligne interne.**

(57) Canne à pêche télescopique caractérisée en ce qu'elle est équipée d'un emmagasineur-dévideur de ligne interne, constitué par un tambour (2) et un guide-fil (7), l'un de ces éléments étant fixe et l'autre mobile, ces deux éléments étant logés dans l'extrémité de la canne (1) opposée au scion, un organe de manoeuvre (11) faisant saillie à l'extérieur de ladite extrémité, étant relié audit élément mobile.

*Fig. 1*

EP 0 073 072 A1

1

"Canne à pêche télescopique à emmagasineur-dévideur de ligne interne".

La présente invention concerne une canne à pêche télescopique à emmagasineur-dévideur de ligne interne.

Les cannes télescopiques (dites téléréglables) pour la pêche à ligne mouillée sont fort prisées du fait qu'elles offrent l'avantage d'une possibilité de réglage continu de leur longueur entre une valeur minimale et l'extension maximum. Ainsi, la longueur optimale pour un lieu de pêche donné peut être aisément obtenue. En outre, lorsque la canne est antérieurement télescopée, son transport est commode.

Cette facilité de réglage de la longueur de la canne s'assortit néanmoins d'une contrainte, à savoir que toute modification de longueur de la canne entraîne le plus souvent l'obligation d'une modification correspondante de la ligne. C'est pourquoi ces cannes sont le plus souvent équipées d'un emmagasineur-dévideur externe, fixé à la canne à la façon d'un moulinet. Un tel organe est fort exposé, donc vulnérable. En outre, sa présence diminue la facilité de transport de la canne.

La présente invention a pour but de fournir une solution efficace à ce problème.

A cet effet, une canne télescopique selon l'invention se caractérise en ce qu'elle est équipée d'un emmagasineur-dévideur de ligne interne, constitué par un tambour et un guide-fil, l'un de ces éléments étant fixe et l'autre mobile, ces deux éléments étant logés dans l'extrémité de la canne opposée au scion, un organe de manoeuvre, faisant saillie à l'extérieur de ladite extrémité, étant relié audit élément mobile.

Pour plus de clarté, un mode de réalisation de l'invention est décrit ci-après à titre illustratif et non restrictif, avec référence aux dessins annexés, dans lesquels :

la figure 1 représente l'extrémité d'une canne selon l'invention, en position refermée, le tout en coupe axiale partielle; et
la figure 2 est similaire à la figure 1, l'extrémité de la canne étant toutefois représentée en position d'utilisation.

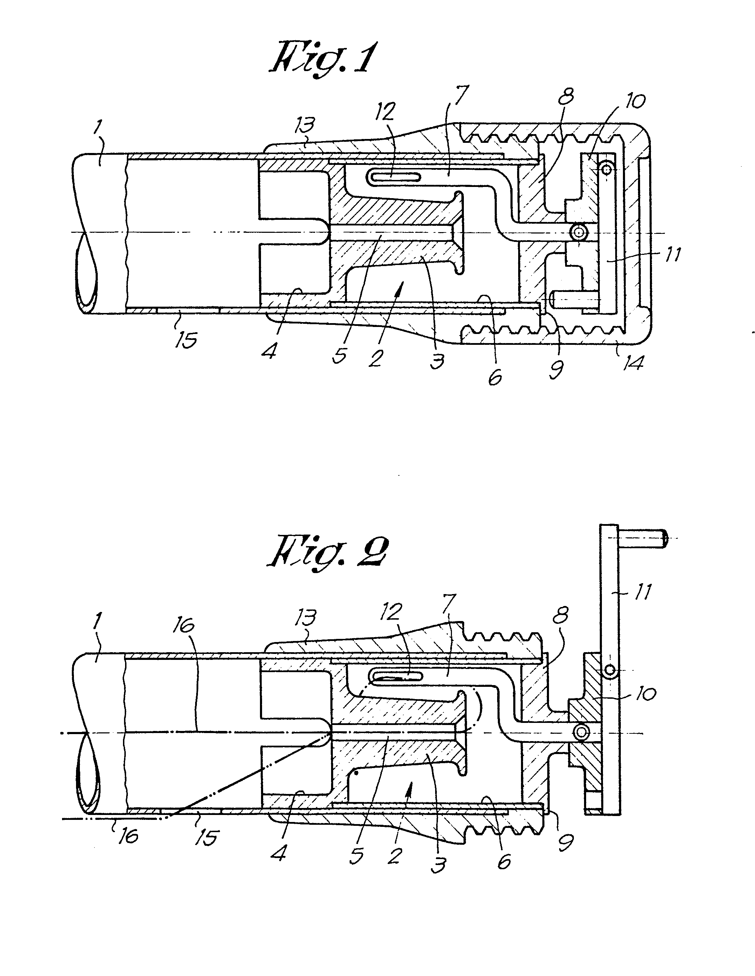

Comme représenté aux dessins, l'extrémité de la canne 1 opposée au scion contient un tambour fixe 2 réalisé sous forme d'un corps tronconique 3 dont la grande base est solidaire d'un bouchon creux 4. Le corps 3 est pourvu d'un alésage axial 5 le traversant de part en part et débouchant dans le creux dudit bouchon 4. Ce dernier est destiné à être inséré dans l'extrémité de la canne 1 où il se maintient par serrage élastique. Une chemise 6 facilite cette insertion et assure un positionnement correct dudit bouchon et rend la pièce solidaire de l'ensemble.

Un guide-fil rotatif 7 est monté sur un opercule 8 destiné à être inséré dans ladite chemise 6 tout en prenant appui, par un épaulement 9, sur le bord de cette dernière ainsi que sur celui de l'extrémité de la canne 1 qui lui sert de butée.

Sur l'extrémité du guide-fil 7 faisant saillie sur la face externe de l'opercule 8 est fixé un bouton 10 portant une

3                              0073072

manivelle rabattable 11.

Le guide-fil 7 est pourvu d'une lumière oblongue 12.

L'extrémité de la canne 1 est pourvue d'un embout 13 sur
lequel se visse un bouchon 14 venant coiffer l'ensemble 8-11.

La ligne peut soit s'étendre axialement à l'intérieur de la
canne 1 (solution préférée), soit extérieurement à cette
dernière auquel cas elle peut être introduite dans celle-ci
via un orifice 15.

L'extrémité 16 de ladite ligne est destinée à être introduite
au travers successivement du passage axial 5 puis de la lumière 12 pour être ensuite frappée sur le corps tronconique 3
ou bien être insérée dans un trou prévu dans ce dernier (non
représenté) et y être bloquée à l'aide d'un plomb fendu.

Il est clair que la rotation de la manivelle 11 dans un sens
entraîne l'enroulement de la ligne 16 autour du corps 3 et,
dans le sens opposé, son dévidage.

L'ensemble ainsi constitué est donc extrêmement pratique et,
parfaitement protégé.

Il est évident que de nombreuses modifications peuvent être
apportées à l'exemple susdécrit, sans pour autant sortir du
cadre de l'invention. Ainsi, un guide-fil pourrait être
solidaire de la chemise 6 et le tambour ou corps tronconique 3
monté à rotation sur l'opercule 8. De même, ledit tambour et
ladite manivelle pourraient être tous deux rotatifs, le tambour étant en outre animé d'un mouvement axial lors de sa
rotation, ceci afin d'obtenir un enroulement bien réparti.

## REVENDICATIONS

1.- Canne à pêche télescopique caractérisée en ce qu'elle est équipée d'un emmagasineur-dévideur de ligne interne, constitué par un tambour (2) et un guide-fil(7), l'un de ces éléments étant fixe et l'autre mobile, ces deux éléments étant logés dans l'extrémité de la canne (1) opposée au scion, un organe de manoeuvre (11), faisant saillie à l'extérieur de ladite extrémité, étant relié audit élément mobile.

2.- Canne à pêche selon la revendication 1, caractérisée en ce que le tambour (2) est fixe, ce dernier étant réalisé sous forme d'un corps d'allure tronconique (3) dont la grande base est solidaire d'un bouchon creux (4) de plus grand diamètre destiné à être enfoncé dans ladite extrémité de la canne (1).

3.- Canne à pêche selon la revendication 2, caractérisée en ce que ledit corps (3) présente un alésage axial le traversant de part en part et débouchant dans le creux dudit bouchon (4).

4.- Canne à pêche selon la revendication 2, caractérisé en ce que ledit guide-fil (7) est monté à rotation sur un opercule (8) destiné à fermer ladite extrémité de la canne (1), une manivelle rabattable (11) étant fonctionnellement reliée audit guide-fil (7).

5.- Canne à pêche selon la revendication 1, caractérisée en ce que ladite extrémité est entourée d'un embout (13) sur lequel peut être vissé un bouchon (14) venant coiffer et enfermer ledit organe de manoeuvre (11).

*Fig.1*

*Fig. 2*

# RAPPORT DE RECHERCHE EUROPEENNE

**Office européen des brevets**

**0073072**
Numéro de la demande

EP 82 20 0866.0

## DOCUMENTS CONSIDERES COMME PERTINENTS

| Catégorie | Citation du document avec indication, en cas de besoin, des parties pertinentes | Revendication concernée |
|---|---|---|
| A | US - A - 3 981 095 (A.A. SHEPHERD) <br> * colonne 1, lignes 28 à 41 ; fig. 1, 2 * <br> -- | 1,5 |
| A | US - A - 2 957 264 (R. RUFF) <br> * colonne 1, lignes 15 à 50 ; fig. 1 à 3 * <br> -- | 1 |
| A | FR - A - 1 522 430 (R. GAU) <br> * revendications 1 à 3 ; fig. 1 * <br> -- | 1 |
| A | FR - A - 1 564 048 (R.R.F. DUPONT) <br> * fig. 1 à 4c * <br> ---- | 5 |

**CLASSEMENT DE LA DEMANDE (Int. Cl. 3)**

A 01 K 87/00

**DOMAINES TECHNIQUES RECHERCHES (Int. Cl. 3)**

A 01 K 87/00
A 01 K 89/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| Berlin | 02-11-1982 | SCHOFER |

OEB Form 1503.1  06.78